# EUROPÄISCHE PATENTSCHRIFT

(11) **EP 0 600 981 B1**
(45) Veröffentlichungstag und Bekanntmachung des Hinweises auf die Patenterteilung: **12.03.1997**
(21) Anmeldenummer: 92917817.6
(22) Anmeldetag: 18.08.1992
(51) Int. Cl.: H04N 7/00, H04N 9/79

(54) **VERFAHREN UND EINRICHTUNG ZUR DECODIERUNG VON BILDSIGNALEN MIT ZUSATZINFORMATIONEN**
PROCESS AND DEVICE FOR DECODING IMAGE SIGNALS CONTAINING ADDITIONAL INFORMATION
PROCEDE ET DISPOSITIF DE DECODAGE DE SIGNAUX VIDEO COMPORTANT DES INFORMATIONS SUPPLEMENTAIRES

(30) Priorität: 27.08.1991 DE 4128337
(43) Veröffentlichungstag der Anmeldung: 15.06.1994
(73) Patentinhaber: DEUTSCHE THOMSON-BRANDT GMBH, 78048 Villingen-Schwenningen (DE)
(72) Erfinder: PLANTHOLT, Martin, D-65549 Limburg (DE)
(74) Vertreter: Hartnack, Wolfgang, Dipl.-Ing.
(86) Internationale Anmeldenummer: EP9201877
(87) Internationale Veröffentlichungsnummer: WO9304561

(56) Entgegenhaltungen:
- WO-A-91/04637
- WO-A-91/11882
- WO-A-91/16793
- WO-A-92/06565

## Beschreibung

Die Erfindung betrifft ein Verfahren und eine Einrichtung zur Decodierung von Bildsignalen mit Zusatzinformationen.

### Stand der Technik

Für die kompatible Einführung eines 16:9-Breitbildformates in bestehende Fernsehstandards (z.B. PAL, NTSC, SECAM), die mit einem 4:3-Bildformat arbeiten, wird das Letterbox-Verfahren diskutiert. Die 4:3-Empfänger stellen hierbei in kompatibler Weise die 16:9-Bildinformation mit schwarzen Streifen am oberen und unteren Bildrand dar. Für die formatfüllende Darstellung auf einem 16:9-Empfänger werden in den schwarzen Streifen der kompatiblen 4:3-Übertragung Zusatzinformationen übertragen, die eine verbesserte Bildqualität erlauben. Die Zusatzinformationen können als nicht sichtbarer Bildinhalt für den 4:3-Empfänger im Ultraschwarz-Bereich übertragen werden. Für die Anwendung auf den PAL-Standard ist das "Letter-box-Verfahren" in "Die neuen Wege des alten PAL", A. Ziemer, E. Matzel, Funkschau 18/1989, und in "PAL-Plus - Innovation fürs Fernsehen", Funkschau Spezial 12/1991 beschrieben.

Ein Verfahren für eine PALplus-Verarbeitung, bei der auch das Letterbox-Format verwendet wird, und ein entsprechender Decoder ist in W091/04637 angegeben. Ein Verfahren zur Aufzeichnung von PALplus-Signalen auf herkömmlichen SVHS-Recordern ist in der WO 91/16793 (veröffentlicht am 31.10.91) beschrieben.

### Erfindung

Der Erfindung liegt die Aufgabe zugrunde, ein Verfahren zur Decodierung von PALplus-Signalen anzugeben, insbesondere von auf SVHS-Recordern aufgezeichneten PALplus-Signalen. Diese Aufgabe wird durch das in Anspruch 1 angegebene erfindungsgemäße Verfahren gelöst.

Im Prinzip besteht das erfindungsgemäße Verfahren darin, daß in Decodern für diese Bildsignale die Decodierung mit Hilfe von Umschaltmitteln 33, 34, 36 aufgeteilt wird auf eine erste Teildecodierungseinrichtung 38 und eine zweite Teildecodierungseinrichtung und daß ermittelt 32 wird, ob die Bildsignale zu decodierende Zusatzinformationen enthalten, wobei:
- im Fall von FBAS-Bildsignalen mit Zusatzinformationen diese Zusatzinformationen über die Umschaltmittel 33, 36 der ersten Teildecodierungseinrichtung 38 und nachfolgend der zweiten Teildecodierungseinrichtung zugeführt werden, wobei der Luminanzanteil der Bildsignale über einen Demodulator 35 oder über die erste Teildecodierungs-Einrichtung der Zweiten Teildecodierungs-Einrichtung zugeführt wird und die Chrominanzsignale vor der zweiten Teildecodierungseinrichtung einem Demodulator 35 zugeführt werden;
- im Fall von Y/C-Bildsignalen mit Zusatzinformationen, die von einem Bildsignal-Aufzeichnungsgerät S-VHS wiedergegeben werden, auf dem die Zusatzinformationen in teildecodierter Form aufgezeichnet sind, die Zusatzinformationen zusammen mit dem Luminanzanteil der Bildsignale über die Umschaltmittel 34, 36 nur der zweiten Teildecodierungseinrichtung zugeführt werden, wobei das C-Bildsignal standardmaßig verarbeitet wird;
- und wobei die zweite Teildecodierungs-Einrichtung aus dem Luminanzanteil der Bildsignale und aus den entsprechend teildecodierten Zusatzinformationen ein Breitbild-Luminanzsignal erzeugt.

Vorteilhafte Weiterbildungen des erfindungsgemäßen Verfahrens ergeben sich aus den zugehörigen abhängigen Ansprüchen.

Der Erfindung liegt die weitere Aufgabe zugrunde, eine Einrichtung für das erfindungsgemäße Verfahren anzugeben. Diese Aufgabe wird durch die in Anspruch 6 angegebene erfindungsgemäße Einrichtung gelöst.

Im Prinzip ist die erfindungsgemäße Einrichtung versehen mit einer Detektorschaltung 32 zur Ermittlung der Art der Bildsignale, mit einer ersten Teildecodierungseinrichtung 38, die ein Nyquist-Filter 381, einen V-T-Demodulator 382 und ein Tiefpaßfilter 383 enthält, mit einer zweiten Teildecodierungs-Einrichtung mit einem Chroma-Demodulator 35 und mit durch die Detektorschaltung gesteuerten Umschaltmitteln 33, 34, 36, die:
- im Fall von FBAS- oder Y/C-Bildsignalen ohne Zusatzinformationen die Bildsignale einer standardmäßigen Verarbeitungseinrichtung FBAS_{ST}, Y_{ST}, C zuführen;
- im Fall von FBAS-Bildsignalen mit Zusatzinformationen diese Zusatzinformationen über einen ersten Schalter 33 der ersten Teildecodierungseinrichtung 38 und nachfolgend über einen A/D-Umsetzer 37 einer zweiten Teildecodierungseinrichtung zugeführen, wobei die Chrominanzsignale vor der zweiten Teildecodierungseinrichtung über den ersten Schalter 33 einem Demodulator 35 zugeführt werden;
- im Fall von Y/C-Bildsignalen mit Zusatzinformationen, die von einem Bildsignal-Aufzeichnungsgerät S-VHS wiedergegeben werden, auf dem die Zusatzinformationen in teildecodierter Form aufgezeichnet sind, die Zusatzinformationen über die Umschaltmittel 34, 36 und über den A/D-Umsetzer 37 nur der zweiten Teildecodierungseinrichtung zugeführt werden, wobei das C-Bildsignal direkt einer standardmäßigen Verarbeitungseinrichtung C zugeführt wird.

Zur Aufzeichnung von PALplus-Signalen auf SVHS-Recordern wurde in WO 91/16793 ein Verfahren angegeben, das eine Teildecodierung der Zusatzinformationen vorsieht. Hierbei werden Zusatzinformationen, die beispielsweise nach WO 91/14346 (veröffentlicht 19.09.91) auf einen Träger aufmoduliert wurden, vor der Aufzeichnung demoduliert und dann als Basisbandsignale aufgezeichnet. Zur Wiedergabe auf einem PALplus-Empfänger können die aufgezeichneten Zusatzinformationen den vor der Aufzeichnung durchgeführten Decodierprozeß rückwärts durchlaufen, d.h. durch Codierung in ein Luminanzsignal Y mit Zusatzinformationen und ein Chrominanzsignal C bzw. in ein FBAS-Signal überführt werden. Im 16:9-Empfänger findet dann nach W091/04637 eine erneute Decodierung statt. Neben dem Nachteil des zusätzlichen Aufwandes im Recorder zur erneuten Codierung der Signale wird durch kaskadierte Codierung/Decodierung der Signal-Rauschabstand im Signal verschlechtert. Eine deutliche Verbesserung ergibt sich, wenn auf SVHS-Recordern aufgezeichnete PALplus-Signale mit teildecodierten Zusatzinformationen als Luminanz- und Chrominanzsignal in den 16:9-Empfänger eingespeist werden.
Gemäß der Erfindung werden auf SVHS-Recordern aufgezeichnete PALplus-Signale in einem 16:9-Fernsehempfänger als solche erkannt und über Umschaltmittel direkt der Analog/Digitalwandlung zur weiteren PALplus-Decodierung zugeführt.

### Zeichnungen

Anhand der Zeichnungen werden Ausführungsbeispiele der Erfindung beschrieben. Die Zeichnungen zeigen in:
- Fig. 1: einen bekannten Decoder für Letterbox-Signale mit Zusatzinformationen;
- Fig. 2: einen bekannten SVHS-Recorder mit vorgeschaltetem Demodulator und Umschaltern;
- Fig. 3: erfindungsgemäße Einrichtung zur Decodierung von auf SVHS-Recordern aufgezeichneten Letterbox-Signalen mit Zusatzinformationen.

### Ausführungsbeispiele

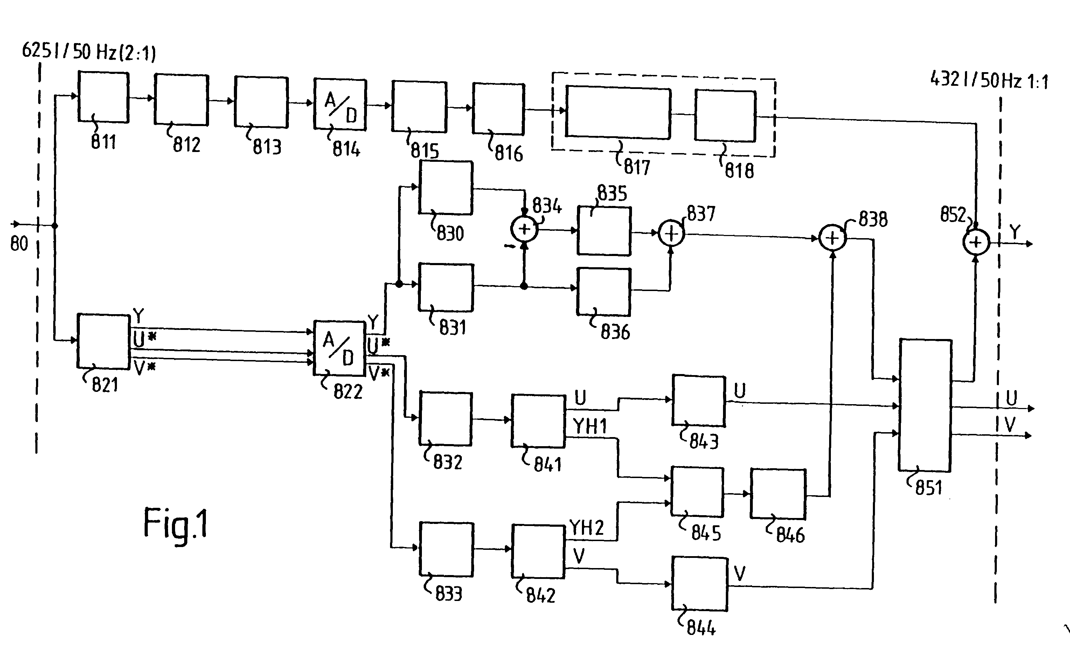

Fig. 1 zeigt einen Decoder für Letterbox-Signale mit Zusatzinformationen. Die Zusatzinformationen (Helper-Signal) sind dem Farbträger aufmoduliert und werden in einer Restseitenbandtechnik übertragen. Das Eingangssignal 80 mit 4:3-Bildformat, 625 Zeilen, 50Hz Bildwechselfrequenz und Halbbild-Darstellung wird sowohl einem Nyquistfilter 811 zur Formung des Restseitenbandes, als auch einem PAL-Demodulator 821 zugeführt. Das Ausgangssignal des Nyquistfilters 811 gelangt zu einem ersten Demodulator 812, mit dem das auf den Farbträger aufmodulierte Helper-Signal demoduliert wird. In einem anschließenden ersten Tiefpaßfilter 813 wird das Helper-Signal mit einer Grenzfrequenz von 4.43Mhz gefiltert, bevor es einem A/D-Wandler 814 zugeführt wird.
In einer anschließenden Speicher- und Demultiplexer-Schaltung 815 werden die jeweiligen Anteile des Helper-Signals wieder den ursprünglichen Zeilen zugeordnet und in einer nachfolgenden ersten Interpolationsschaltung 816 horizontal interpoliert bzw. expandiert und den Bildpunkten aus den 432 aktiven Zeilen des Letterbox-Formats zugeordnet.
In einem anschließenden ersten Interlace-Progressive-Interpolator 817 wird aus dem Interlace-Helper-Signal ein Helper-Signal für ein progressives Bildformat gebildet. In einem anschließendem zweiten Demodulator 818 wird mit Hilfe einer zeilen- und vollbildweisen ±1-Wichtung das Helper-Signal in die richtige spektrale Lage innerhalb des fy-ft-Bereichs versetzt und anschließend einem dritten Addierer 852 zugeführt. Die Y-, U*-, V*-Komponenten aus dem PAL-Demodulator 821 werden einer A/D-Wandler-Schaltung 822 zugeführt. Das digitale Y-Signal gelangt zu einer ersten Verzögerungsschaltung 830 und zu einer ersten 'Intraframe-Average'-Schaltung 831. Das Ausgangssignal dieser Schaltung wird einer zweiten Verzögerungsschaltung 836 zugeführt und in einem Subtrahierer 834 vom Ausgangssignal der ersten Verzögerungsschaltung 830 abgezogen. Das Ausgangsignal dieses Subtrahierers wird über einen zweiten Tiefpaß 835 einem ersten Addierer 837 zugeführt. Das Ausgangssignal der zweiten Verzögerungsschaltung 836 wird ebenfalls dem ersten Addierer 837 zugeführt. Das Ausgangssignal des ersten Addierers 837 besteht aus den Luminanzkomponenten Yl und Ybp und gelangt zu einem zweiten Addierer 838.
Das Signal U aus dem zweiten A/D-Wandler 822 gelangt zu einer zweiten 'Intraframe-Average'-Schaltung 832 und von dort zu einem ersten Vertikalseparator 841.
Das Signal V gelangt über eine dritte 'Intraframe-Average'-Schaltung 833 zu einem zweiten Vertikalseparator 842. Der erste Vertikal-Separator 841 liefert an seinen Ausgängen die Signale U und Yh1, der zweite Vertikalseparator 842 liefert an seinen Ausgängen die Signale V und Yh2.
Das U-Signal wird einem ersten Vertikal-Interpolator 843 zugeführt und das V-Signal einem zweiten Vertikal-Interpolator 844. In diesen Interpolatoren werden die fehlenden U- und V-Bildpunkte gebildet und zusammen mit den bereits vorhandenen dem zweiten Interlace-Progressive-Interpolator 851 zugeführt. Die Signalanteile Yh1 und Yh2 sind höherfrequente horizontale Spektralanteile und werden in einem Zeilenmultiplexer 845 kombiniert und als Signal Yh einem dritten Demodulator 846 zugeführt. Dort werden sie durch eine bildpunktweise ±1-Wichtung in die richtige spektrale Lage zurückversetzt. Das Ausgangsignal des dritten Demodulators 846 wird ebenfalls dem zweiten Addierer 838 zugeführt. Das Ausgangssignal des zweiten Addierers 838 gelangt als zusammengesetzte Y-Komponente ebenfalls zum zweiten Interlace-Progressive-Interpolator 851.
Zu dem Y-Ausgangssignal dieses Interlace-Progressive-Interpolators 851 wird in einem dritten Addierer 852 das Helper-Signal addiert. Diese kombinierte Y-Komponente und die U- und V-Komponenten aus dem zweiten Interlace-Progressive-Interpolator 851 werden wieder D/A-gewandelt (nicht dargestellt). Am Ausgang des Decoders steht ein Fernsehsignal zur Verfügung mit 16:9-Bildformat, 432 aktiven Zeilen, 50Hz Bildwechselfrequenz, progressiver Darstellung und einer erhöhten Luminanzbandbreite, bezogen auf den 5MHz-PAL-Übertragungskanal.

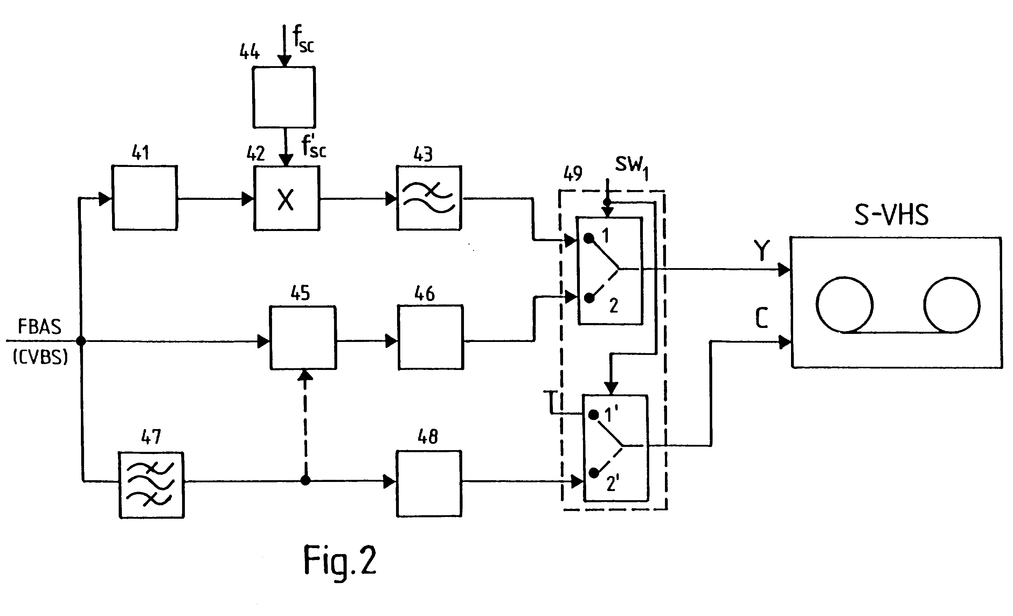

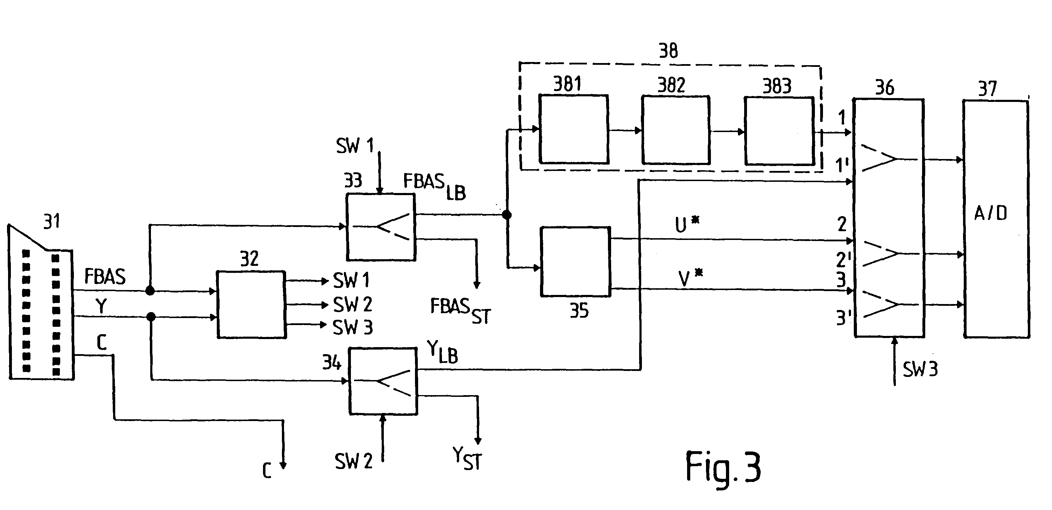

Für die Aufzeichnung mit einem Videorecorder S-VHS wird das Eingangssignal 80 von Fig. 1 beispielsweise über einen Tuner oder eine SCART-Buchse als Eingangssignal FBAS in die Schaltung nach Fig. 2 eingespeist. Die in den Letterbox-Streifen enthaltenen Zusatzinformationen werden nur teildecodiert. Das Eingangssignal FBAS wird zu einem Nyquistfilter 41, zu einer Separierstufe 45 und zu einem Bandpaßfilter 47 weitergeleitet. Im Bandpaßfilter 47 wird der um den Farbträger liegende Frequenzbereich herausgefiltert und das Chrominanzsignal C gewonnen. In einer zweiten Laufzeitschaltung 48 wird eine zeitliche Anpassung an die Luminanzsignalverarbeitung bzw. an die Verarbeitungszeit für die Zusatzinformationen vorgenommen. Dieses Chrominanzsignal gelangt dann auf einen vierten Eingang 2' einer zeilenweise schaltbaren Videoumschaltvorrichtung 49. Während der Letterbox-Zeilen (Schalterstellung 1 bzw. 1') ist kein einen Chrominanz-Bildinhalt repräsentierendes Chrominanzsignal vorhanden. In diesem Fall wird der dritte Eingang 1' der Videoumschaltvorrichtung 49 auf einen konstanten Wert gelegt. Das Luminanzsignal Y wird in der Separierstufe 45 aus dem FBAS-Signal gewonnen und anschließend in einer ersten Laufzeitschaltung 46 an die Verarbeitungszeit für die Zusatzinformationen angeglichen und einem zweiten Eingang 2 der Videoumschaltvorrichtung 49 zugeführt.
Die Videoumschaltvorrichtung wird von einem Steuersignal sw₁ gesteuert. Die beiden Schalter in der Videoumschaltvorrichtung befinden sich in Stellung 2 bzw. 2' während der Zeilen des Hauptsignals. Die farbträgermodulierten Zusatzinformationen aus den Zeilen der Letterbox-Streifen des FBAS-Signals werden zunächst im Nyquistfilter 41 restseitenband-demoduliert. Dessen Ausgangssignal wird in einem Demodulator 42 demoduliert, wobei diesem Demodulator ebenfalls die Farbträgerfrequenz f_{sc}' mit einer geeigneten Phasenlage zugeführt wird. Die erforderliche Phasenlage von f_{sc}', die der Modulationsphase der Zusatzinformationen entsprechen muß, wird über einen Phasenschieber 44 für die Farbträgerfrequenz f_{sc} herbeigeführt. Die bei der Demodulation entstehenden unerwünschten Modulationsprodukte des oberen Seitenbandes werden in einem nachfolgenden Tiefpaßfilter 43 abgetrennt. Dieses Tiefpaßfilter begrenzt das gewonnene Basisband der Zusatzinformationen auf Frequenzen bis zur Farbträgerfrequenz. Das Ausgangssignal des Tiefpaßfilters wird einem ersten Eingang 1 der Videoumschaltvorrichtung 49 zugeführt.
Wenn ein Standard-FBAS-Signal vorliegt, d.h. kein Letterbox-Signal oder ein Letterbox-Signal ohne Zusatzinformationen, bleiben die beiden Schalter in der Videoumschaltvorrichtung 49 vorteilhaft in Stellung 2 bzw. 2'.
Zur Verarbeitung von derart aufgezeichneten Letterbox-Signalen, d.h. zur Decodierung und Darstellung mittels eines Decoders nach Fig. 1, müßte die Teildecodierung wieder rückgängig gemacht werden. In diesem Falle bedeutet dies eine erneute Modulation. Neben dem erhöhten Aufwand im Recorder S-VHS ist eine Verschlechterung des Signal-Rauchabstandes sowie eine Jitter-Akkumulation zu erwarten, wodurch die Rückgewinnung der Zusatzinformationen nachteilig beeinflußt wird. Diese Nachteile lassen sich vermeiden, wenn der Decoder so ausgebildet wird, daß aufgezeichnete Letterbox-Signale mit Zusatzinformationen als solche erkannt werden. Fig. 3 zeigt die erfindungsgemäße Einrichtung zur Erkennung und Decodierung von auf SVHS-Recordern aufgezeichneten Letterbox-Signalen mit Zusatzinformationen. In den Decoder-Teil eines 16:9-Fernsehempfängers werden beispielsweise über eine SCART-Buchse 31 FBAS- oder Luminanz/Chrominanz (Y/C)-Letterbox-Signale eingespeist. Die FBAS- bzw. Y/C-Signale können eine Kennung tragen, die diese Signale als Letterbox-Signale mit Zusatzinformationen ausweist. Diese Kennung kann beispielsweise nach DE 4114605 erfolgen. Auch ist die Übertragung einer Kennung in der vertikalen Austastlücke oder während der ersten Hälfte der Zeile 23 denkbar. Das Kennsignal wird in einer nachfolgenden Detektorschaltung 32 ausgewertet und davon abhängig werden Steuersignale SW1, SW2 und SW3 erzeugt. Es ist auch möglich, die Detektorschaltung 32 durch einen eigenständigen Letterbox-Detektor zu ersetzen, der ohne Kennsignale auskommt.
Aufgabe der Detektorschaltung 32 ist es, Standard-FBAS- und Standard-Y/C-Signale von Letterbox-FBAS- und -Y/C-Signalen mit Zusatzinformationen zu unterscheiden. Wird ein Standard-FBAS-Signal erkannt, liefert diese Detektorschaltung einen Schaltimpuls SW1, der über einen ersten Schalter 33 das Signal der standardmäßigen FBAS-Decodierung mit der Schalterstellung FBAS_{ST} zuführt. Handelt es sich um ein Letterbox-FBAS-Signal, wird das Signal einer Decodierung nach Fig. 1 zugeführt.
Die Schaltung zur Decodierung der Zusatzinformationen nach Fig. 1 wird jedoch vorteilhaft aufgeteilt in eine erste Teildecodierungseinrichtung 38, einen PAL-Demodulator 35 und eine zweite Teildecodierungseinrichtung. Diese zweite Teildecodierungseinrichtung entspricht dem in Fig. 1 rechts von den A/D-Wandlern 814 und 822 befindlichen Schaltungsteil. Der erste Schalter 33 steht auf der Position FBAS_{LB} und der Dreifachumschalter 36 wird über den Schaltimpuls SW3 in die Stellungen 1, 2, 3 gebracht.
Bei Einspeisung von getrennten Luminanz- und Chrominanzsignalen (Y/C) wird nur eine Unterscheidung im Luminanzsignal Y getroffen. Die Chrominanz wird immer standardmäßig in PAL-Demodulator 35 verarbeitet und laufzeitangepaßt mit dem decodierten Y-Signal wiedergegeben. Eine Verarbeitung der Chrominanz entsprechend der W091/04637, wobei Übersprechstörungen durch einen 'Intraframe-Average' Prozeß (Fig. 1; 832, 833) eliminiert werden, ist nicht zweckmäßig, da hierzu Gebrauch von Phasenbeziehungen des Farbträgers zum Bildsignal gemacht wird, die in der erforderlichen Genauigkeit nach einer SVHS-Aufzeichnung nicht mehr gegeben sind.
Erkennt die Detektorschaltung 32 ein Standard-Luminanzsignal Y, wird über den Schaltimpuls SW2 ein zweiter Schalter 34 in Stellung Y_{ST} gebracht und das Luminanzsignal standardmäßig weiterverarbeitet. Bei Erkennung eines Luminanz-Letterbox-Signals Y geht der zweite Schalter 34 in Position Y_{LB}. Das Luminanz-Letterbox-Signal Y wird dann direkt über Dreifachumschalter 36, der mittels Schaltimpuls SW3 in Stellung 1' bzw. 2' und 3' geschaltet ist, der Analog-Digital-Wandlung und weiter der zweiten Teildecodierungseinrichtung (in Fig. 3 nicht dargestellt) zugeführt. Über die Positionen 2' und 3' erhält ein A/D-Umsetzer 37 keine Chrominanzsignale, da die Chrominanz C standardmäßig verarbeitet wird. Das Luminanz-Letterbox-Signal Y ist somit an der ersten Teildecodierungseinrichtung 38 vorbeigeführt worden.
Prinzipiell kann sich die erste Teildecodierungseinrichtung 38 auf eine beliebige Codierung beziehen, wenn eine entsprechende Einrichtung zur Teilcodierung vor der SVHS-Aufzeichnung eingesetzt wurde. In Fig. 3 besteht die erste Teildecodierungseinrichtung 38 aus einem Nyquist-Filter 381 (entspricht den Blöcken 811 und 41), aus einem nachfolgenden V-T-Demodulator 382 (entspricht den Blöcken 821 und 42/44) und aus einem nachgeschalteten Tiefpaßfilter 383 (entspricht den Blöcken 813 und 43) mit einer Grenzfrequenz von 4.43MHz. Der Demodulator 35 entspricht Demodulator 821.

Statt eines S-VHS-Videorecorders können auch andere, entsprechende Recorder, wie z.B. Hi8-Recorder, verwendet werden.

Für andere Fernsehsignalnormen können die genannten Zahlenwerte und Schaltungen entsprechend angepaßt werden.

## Patentansprüche

1. Verfahren zur Decodierung von Bildsignalen, die im Letterbox-Format Y-Zusatzinformationen zur Verbesserung der Bildqualität beinhalten können, **dadurch gekennzeichnet,** daß in Decodern für diese Bildsignale die Decodierung mit Hilfe von Umschaltmitteln (33, 34, 36) aufgeteilt wird auf eine erste Teildecodierungs-Einrichtung (38) und eine nachfolgende, zweite Teildecodierungs-Einrichtung und daß ermittelt (32) wird, ob die Bildsignale zu decodierende Zusatzinformationen enthalten, wobei:
- im Fall von FBAS-Bildsignalen mit Zusatzinformationen diese Zusatzinformationen durch die Umschaltmittel (33, 36) der ersten Teildecodierungs-Einrichtung (38) und von dort der zweiten Teildecodierungs-Einrichtung zugeführt werden und der Luminanzanteil der Bildsignale über einen Demodulator (35) oder über die erste Teildecodierungs-Einrichtung und der Chrominanzanteil der Bildsignale über den Demodulator (35) der zweiten Teildecodierungs-Einrichtung zugeführt werden;
- im Fall von Y/C-Bildsignalen mit Zusatzinformationen, die von einem Bildsignal-Aufzeichnungsgerät (S-VHS) wiedergegeben werden, auf dem die Zusatzinformationen in teildecodierter Form aufgezeichnet sind, die Zusatzinformationen zusammen mit dem Luminanzanteil der Bildsignale über die Umschaltmittel (34, 36) nur der zweiten Teildecodierungs-Einrichtung zugeführt werden und die Chrominanzsignale standardmäßig wie im Fall von Y/C-Bildsignalen ohne Zusatzinformationen verarbeitet werden,
- und wobei die zweite Teildecodierungs-Einrichtung aus dem Luminanzanteil der Bildsignale und aus den entsprechend teildecodierten Zusatzinformationen ein Breitbild-Luminanzsignal erzeugt.

2. Verfahren nach Anspruch 1, **dadurch gekennzeichnet,** daß in der ersten Teildecodierungseinrichtung (38) unter anderem eine V-T-Demodulation (382) und eine Tiefpaßfilterung (383) vorgenommen wird.

3. Verfahren nach Anspruch 1 oder 2, **dadurch gekennzeichnet,** daß die FBAS- und Y/C-Bildsignale über eine gemeinsame SCART-Buchse zugeführt werden.

4. Verfahren nach einem oder mehreren der Ansprüche 1 bis 3, **dadurch gekennzeichnet,** daß bei der Ermittlung der Anwesenheit von Zusatzinformationen eine entsprechende Kennung in den Bildsignalen ausgewertet wird oder die Bildsignale selbst ausgewertet werden.

5. Verfahren nach einem oder mehreren der Ansprüche 1 bis 4, **dadurch gekennzeichnet,** daß das Bildsignal-Aufzeichnungsgerät ein S-VHS- oder Hi-8-Videorecorder ist.

6. Einrichtung für ein Verfahren nach einem oder mehreren der Ansprüche 1 bis 5, versehen mit einer Detektorschaltung (32) zur Ermittlung der Art der Bildsignale, mit einer ersten Teildecodierungs-Einrichtung (38) für die Zusatzinformationen und einer nachfolgenden, zweiten Teildecodierungs-Einrichtung, mit einem Demodulator (35) und mit durch die Detektorschaltung gesteuerten Umschaltmitteln (33, 34, 36), die:
- im Fall von FBAS-Bildsignalen mit Zusatzinformationen diese Zusatzinformationen über einen ersten Schalter (33) der ersten Teildecodierungs-Einrichtung (38) und von dort der zweiten Teildecodierungs-Einrichtung zuführen, wobei über den ersten Schalter (33) der Luminanzanteil der Bildsignale über einen Demodulator (35) oder über die erste Teildecodierungs-Einrichtung und der Chrominanzanteil der Bildsignale über den Demodulator (35) der zweiten Teildecodierungs-Einrichtung zugeführt werden;
- im Fall von Y/C-Bildsignalen mit Zusatzinformationen, die von einem Bildsignal-Aufzeichnungsgerät (S-VHS) wiedergegeben werden, auf dem die Zusatzinformationen in teildecodierter Form aufgezeichnet sind, die Zusatzinformationen zusammen mit dem Luminanzanteil der Bildsignale über die Umschaltmittel (34, 36) nur der zweiten Teildecodierungs-Einrichtung zugeführt werden und die Chrominanzsignale standardmaßig wie im Fall von Y/C-Bildsignalen ohne Zusatzinformationen verarbeitet werden,
- und wobei die zweite Teildecodierungs-Einrichtung aus dem Luminanzanteil der Bildsignale und aus den entsprechend teildecodierten Zusatzinformationen ein Breitbild-Luminanzsignal erzeugt.

## Claims

1. Method of decoding image signals which may include additional items of Y-information that are used for improving the quality of the image in the letter box format, characterised in that, in the decoders for these image signals, the decoding process is distributed over a first partial decoding device (38) and a succeeding second partial decoding device with the help of switch means (33, 34, 36) and that it is determined (32) whether the image signals contain additional items of information that are to be decoded, wherein:
- in the case of FBAS image signals having additional items of information, these additional items of information are supplied via the switch means (33, 36) to the first partial decoding device (38) and from there to the second partial decoding device and the luminance component of the image signals is supplied to the second partial decoding device via a demodulator (35) or via the first partial decoding device and the chrominance component of the image signals is supplied to the second partial decoding device via the demodulator (35);
- in the case of Y/C image signals having additional items of information, which are reproduced by an image signal recording device (S-VHS) in which the additional items of information are recorded in partially decoded form, the additional items of information together with the luminance component of the image signals are supplied via the switch means (34, 36) only to the second partial decoding device and the chrominance signals are processed in standard manner as in the case of Y/C image signals that do not include additional items of information.
- and wherein the second partial decoding device produces a wide screen luminance signal from the luminance component of the image signals and the corresponding partially decoded additional items of information.

2. Method in accordance with Claim 1, characterised in that, inter alia, a V-T demodulation process (382) and a low pass filtering process (383) are undertaken in the first partial decoding device (38).

3. Method in accordance with Claim 1 or 2, characterised in that, the FBAS and Y/C image signals are supplied through a common SCART socket.

4. Method in accordance with one or more of the Claims 1 to 3, characterised in that, upon the detection of the presence of additional items of information, a corresponding identification code in the image signals is evaluated or the image signals themselves are evaluated.

5. Method in accordance with one or more of the Claims 1 to 4, characterised in that, the image signal recording device is an S-VHS or Hi-8 video recorder.

6. Apparatus for a method in accordance with one or more of the Claims 1 to 5 which is provided with a detector circuit (32) for detecting the type of image signals, with a first partial decoding device (38) for the additional items of information and a succeeding second partial decoding device with a demodulator (35) and with switch means (33, 34, 36) which are controlled by the detector circuit and which:
- in the case of FBAS image signals having additional items of information, supply these additional items of information via a first switch (33) to the first partial decoding device (38) and from there to the second partial decoding device, whereby the luminance component of the image signals is supplied to the second partial decoding device via a demodulator (35) or via the first partial decoding device and the chrominance component of the image signals is supplied to the second partial decoding device via the demodulator (35);
- in the case of Y/C image signals having additional items of information, which are reproduced by an image signal recording device (S-VHS) in which the additional items of information are recorded in partially decoded form, the additional items of information together with the luminance component of the image signals are supplied via the switch means (34, 36) only to the second partial decoding device and the chrominance signals are processed in standard manner as in the case of Y/C image signals that do not include additional items of information and wherein the second partial decoding device produces a wide screen luminance signal from the luminance component of the image signals and the corresponding partially decoded additional items of information.

## Revendications

1. Procédé de décodage de signaux vidéo, lesquels peuvent comporter des informations supplémentaires Y au format boîte aux lettres destinées à améliorer la qualité de l'image, caractérisé par le fait que le décodage de ces signaux vidéo dans le décodeur est partagé à l'aide de moyens de commutation (33, 34, 36) sur un premier dispositif de décodage partiel (38) et un deuxième dispositif de décodage partiel (32) suivant et on détermine si les signaux vidéo contiennent des informations supplémentaires à décoder :
- en cas de signaux vidéo vidéocomposites comportant des informations supplémentaires, ces informations supplémentaires étant acheminées au premier dispositif de décodage partiel (38) et de là au deuxième dispositif de décodage partiel par le biais des moyens de commutation (33, 36) et la partie luminance des signaux vidéo étant acheminée au deuxième dispositif de décodage partiel par le biais d'un démodulateur (35) ou par le biais du premier dispositif de décodage partiel et la partie chrominance des signaux vidéo étant acheminée au deuxième dispositif de décodage partiel par le biais d'un démodulateur (35) ;
- en cas de signaux vidéo Y/C comportant des informations supplémentaires qui sont reproduits par un enregistreur de signaux vidéo (S-VHS) et sur lesquels sont enregistrées des informations supplémentaires sous une forme partiellement codée, les informations supplémentaires ainsi que la partie luminance des signaux vidéo n'étant acheminées qu'au deuxième dispositif de décodage partiel par le biais des moyens de commutation (34, 36) et les signaux de chrominance étant ici traité de façon standard comme dans le cas de signaux vidéo Y/C sans informations supplémentaires ;
- et le deuxième dispositif de décodage partiel produisant un signal de luminance d'image large à partir de la partie luminance des signaux vidéo et à partir des informations supplémentaires correspondantes partiellement décodées.

2. Procédé selon la revendication 1, caractérisé par le fait qu'une démodulation V-T (382) et un filtrage passe-bas (383) sont, entre autres, effectués dans le premier dispositif de décodage partiel (38).

3. Procédé selon la revendication 1 ou 2, caractérisé par le fait que es signaux vidéo vidéocomposite ou Y/C sont acheminés par le biais d'une prise Péritel commune.

4. Procédé selon une ou plusieurs des revendications 1 à 3, caractérisé par le fait que lors de la détermination de la présence des informations supplémentaires, un identifiant correspondant est évalué dans les signaux vidéo ou les signaux vidéo eux-mêmes sont évalués.

5. Procédé selon une ou plusieurs des revendications 1 à 4, caractérisé par le fait que l'enregistreur de signal vidéo est un magnétoscope S-VHS ou Hi8.

6. Dispositif pour un procédé selon une ou plusieurs des revendications 1 à 5, muni d'un circuit détecteur (32) destiné à déterminer la nature des signaux vidéo, d'un premier dispositif de décodage partiel (38) pour les informations supplémentaires et d'un deuxième dispositif de décodage partiel suivant, d'un démodulateur (35) et des moyens de commutation (33, 34, 36) commandés par le circuit détecteur, lesquels :
- en cas de signaux vidéo vidéocomposites comportant des informations supplémentaires, acheminent ces informations supplémentaires au premier dispositif de décodage partiel (38) par le biais d'un premier commutateur (33) et de là au deuxième dispositif de décodage partiel où, par le biais du commutateur (33), la partie luminance des signaux vidéo étant acheminée au deuxième dispositif de décodage partiel par le biais d'un démodulateur (35) ou par le biais du premier dispositif de décodage partiel et la partie chrominance des signaux vidéo étant acheminée au deuxième dispositif de décodage partiel par le biais d'un démodulateur (35) ;
- en cas de signaux vidéo Y/C comportant des informations supplémentaires qui sont reproduits par un enregistreur de signaux vidéo (S-VHS) et sur lesquels sont enregistrées les informations supplémentaires sous une forme partiellement codée, n'acheminent les informations supplémentaires ainsi que la partie luminance des signaux vidéo qu'au deuxième dispositif de décodage partiel par le biais des moyens de commutation (34, 36) et les signaux de chrominance sont ici traité de façon standard comme dans le cas de signaux vidéo Y/C sans informations supplémentaires ;
- et le deuxième dispositif de décodage partiel produisant un signal de luminance d'image large à partir de la partie luminance des signaux vidéo et à partir des informations supplémentaires correspondantes partiellement décodées.
